Europäisches Patentamt

European Patent Office

Office européen des brevets

(19)

(11) Publication number: **0 281 209**
**A2**

(12) **EUROPEAN PATENT APPLICATION**

(21) Application number: **88200404.7**

(51) Int. Cl.⁴: **B29C 47/02**

(22) Date of filing: **03.03.88**

(30) Priority: **06.03.87 NL 8700542**

(43) Date of publication of application:
**07.09.88 Bulletin 88/36**

(84) Designated Contracting States:
**AT BE CH DE ES FR GB IT LI NL SE**

(71) Applicant: **STAMICARBON B.V.**
**Mijnweg 1**
**NL-6167 AC Geleen(NL)**

(72) Inventor: **Pluyter, Pieter Boudewijn**
**Dagoberstraat 100**
**NL-6132 ER Sittard(NL)**
Inventor: **van der Heiden, Leonardus**
**Hendrikus**
**Koempel 81**
**NL-6372 NG Landgraaf(NL)**

(54) **Process for applying a plastic covering around a tube- or wire-shaped object.**

(57) The invention relates to a process for applying a plastic covering around a tube-or wire-shaped object, which comprises preparing a solution of a high molecular polyolefin, especially polyethylene or polypropylene and an organic solvent, with a concentration of between 5 and 50 wt.% and extruding said solution through an annular extrusion gap, around a tube-or wire-shaped object fed within the circumference of the gap. After discharging, stretching and substantially removing solvent from the extrudate, this is contacted with the object to be covered. The covered product is cooled and solvent is further removed from the covering. If appropriate, an after-treatment is applied to the covered object.

FIG.1

EP 0 281 209 A2

## PROCESS FOR APPLYING A PLASTIC COVERING AROUND A TUBE-OR WIRE-SHAPED OBJECT

The invention relates to a process for applying a covering of a high molecular polyolefinic plastic around a tube-or wire-shaped object.

The application of a covering around an object is known from, for example, a brochure by Messrs. Lenzing A.G. A-4860 Lenzing, Austria, entitled 'Films for the cable industry'. The process known from this brochure comprises the cutting of a thin film into a tape, which is then wound around the object to be covered. The winding process requires a minimum strength of the tape, which means that the tape must have a certain minimum thickness, depending on the material. The disadvantage of the known process is that, on account of the required minimum tape thickness, it results in a relatively thick covering. Further, the outer surface of the covering is irregular.

Another known process for applying a covering around a (tube-or wire-shaped) object comprises the application around the said object of a plastic in the melt phase, for example with the aid of an extruder equipped with a sheath die. See Plastics Extrusion Technology, Reinhold Book Corporation (1968), p. 198 ff. The disadvantage of this process is that the thickness of the applied layer can vary relatively strongly and that, when the thickness of the extruded layer is small, surface defects can occur in or on the plastic layer applied. In view of these disadvantages, a relatively thick covering is chosen in practice, to avoid at all times that the object to be covered is locally insufficiently protected.

The object of the invention is to provide a process in which the above-mentioned disadvantages are absent or occur to a lesser extent.

The invention is characterized by the combination of the following process steps:

1) preparing a solution of a high molecular polyolefin and an organic solvent with a concentration of between 5 and 50 wt %;

2) extruding the said solution through an annular extrusion gap, around a tube-or wire-shaped object fed within the circumference of the gap;

3) discharging, stretching and substantially removing solvent from the extrudate and contacting the same with the object to be covered, the ratio of the velocity at which the extrudate is discharged from the annular gap to the velocity of the object being between 10 and 1000, and the stretching rate of the extrudate being between 10 and 20,000 %/s, in particular between 50 and 20,000 %/s;

4) cooling the covered product and further removing solvent from the covering, optionally followed by an after-treatment.

With the process according to the invention it is achieved that the covering can be applied around the object within narrow thickness tolerances, while in addition the covering has a surface with very few or no irregularities. On account of the narrow thickness tolerances, the average thickness of the covering layer can be chosen smaller than was hitherto possible with the known process, without diminishing the protection of the object. This results in a considerable saving of material. This is elucidated in the examples, where the narrow thickness tolerances and the absence of surface irregularity is tested in terms of thickness distribution and surface roughness. Further, this affords a saving in the transport of, for example, objects wound on rolls.

Be it stated here that from EP-A-0181016 it is known per se to prepare a solution of a high molecular polyolefin and obtain a product therefrom by extrusion. The solvents mentioned therein are also applicable in the present invention.

One embodiment of the process according to the invention is characterized in that a solution is prepared of a high molecular polyethylene with a weight average molecular weight of between 250,000 and 6,000,000, preferable between 800,000 and 3,000,000, at a concentration, in solution, of between 8 and 30 wt %. The advantage of this embodiment is that a covering is obtained which has good electrical insulation properties and which in addition is highly abrasion resistant.

Another embodiment of the process according to the invention is characterized in that the polyethylene solution is to a large extent free from contamination by inorganic and/or organic polar compounds, for example to the extent that the covering contains less than 20 ppm titanium, less than 65 ppm chlorine and less than 40 ppm Al. In this way it is achieved that the covering obtained has enhanced electrical insulation properties, in particular with regard to arc and tracking resistance and dielectric loss factor.

In an application of the covered objects involving high demands regarding flammability, in particular regarding flame retardancy, a flame retarder can be added to the solution, e.g. antimony trioxide or antimony pentoxide, possibly in combination with octabromodiphenyl oxide.

Yet another embodiment of the process according to the invention is characterized in that a solution of polypropylene and an organic solvent is made using a polypropylene with a weight-average molecular weight of between 400,000 and 6,000,000. The advantage of this embodiment is that the covering obtained is relatively resistant to high temperatures, e.g. a temperature above 140¤C up to, at short exposure times, about 170¤C.

Yet another embodiment of the process according to the invention is characterized in that, upon exiting from the extrusion die, the extrudate is cooled by a gaseous or liquid medium to below the solution temperature of the polyolefin in the solvent. In this way, a highly crystalline orientation of the polyolefin molecules in the extrudate is achieved, which favourably affects the abrasion resistance and the electrical insulation properties of the covering and the number of surface defects.

A preferred embodiment of the process according to the invention comprises, in combination, quenching the extrudate with simulta neous removal of solvent and highly stretching the extrudate. Both cooling and stretching are subject to the requirement that the final state must be reached before the extrudate comes into contact with the object to be covered. With respect to the degree of solvent removal, the final state is, for example, a solvent content in the covering material of between 3 and 10 wt %. If necessary, the solvent can be further removed from the covering material by pulling the covered object in its entirety, for example, through a suitable die brought to a temperature which at most equals the solution temperature of the polymer in the solvent used. With regard to the stretching, the final state is between 50 and 800 times, being the ratio of the velocity of the extrudate coming out of the extrusion die to the velocity of the object to be covered.

The outer surface of the covered product can be physically or chemically modified, to improve the adhesive properties thereof, for example for the application of a paint layer, a polymer layer, colour-coding and/or a metal coating.

The chemical modification of the outer surface of the covering can comprise, for example, a corona treatment or a plasma treatment and can be performed in a manner known to one skilled in the art. To elucidate the process according to the invention, the following examples are given.

Examples

A suspension of 10 wt % polyethylene with a weight average molecular weight of 1,000,000 and decalin was prepared and was dissolved in an extruder at a temperature of between 170 and 200¤C. The extruder used was a "Werner und Pfleiderer" machine, type ZSK. The extruder was equipped with a wire-coating die, through which a 1 mm thick metal wire was passed. The experiments were performed at different wire velocities (see Table I). The thickness and wear values measured depend on wire velocity and extrusion speed.

## T A B L E   I

|  | | Ex. 1 | | Ex. 2 | | Ex. 3 | | Ex. 4 | | Ex. 5 | |
|---|---|---|---|---|---|---|---|---|---|---|---|
| Wire velocity | m/min | 1 | | 1 | | 20 | | 50 | | 80 | |
| Wire temperature | ¤C | 20 | | 50 | | 50 | | 50 | | 50 | |
| Die gap width | mm | 1.2 | | 1.2 | | 1.2 | | 1.2 | | 1.2 | |
| Extrusion speed | m/min | 0.1 | 0.2 | 0.1 | 0.2 | 0.1 | 0.2 | 0.1 | 0.2 | 0.1 | 0.2 |
| Covering thickness | $\mu$m | 40 | 9 | 37.9 | 16.9 | 8.5 | 12.0 | 5.3 | 7.6 | 4.2 | 5.8 |
| Thickness spread (10 measurements) | % | 6 | 5 | 3 | 2 | 3 | 3 | 2 | 3 | 4 | 4 |
| Wear number x $10^6$ | | 5.1 | 2.7 | 5.8 | 3.0 | – | 3.1 | – | 3.4 | – | 3.8 |
| Roughness   Ra ($\mu$m) | | 3.1 | 3.4 | 3.0 | 3.4 | 2.6 | 2.0 | 1.8 | 1.9 | 1.9 | 1.6 |
|             Rt ($\mu$m) | | 4.2 | 4.7 | 4.1 | 4.6 | 3.7 | 3.4 | 3.1 | 2.7 | 2.1 | 2.1 |

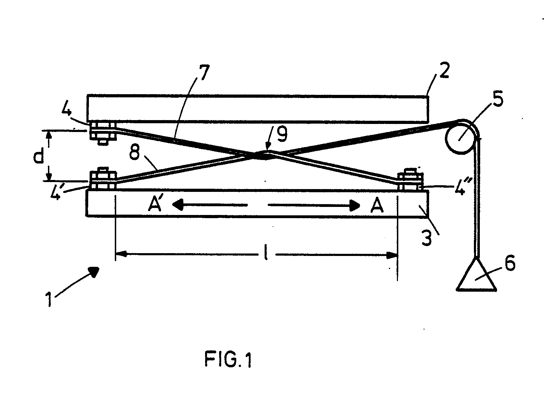

Wear was measured according to the test method laid down by the Boeing company, under the code Boeing Material Specification (BMS) 13-51 F, page 82 (1976). In this test method, two cables are twisted around one another with a single twist, as indicated in the drawing according to figure 1, the upper cable, dimensioned as in the examples, being subjected to a tensile load of 2.5 kg. Figure 1 shows a device with which the above-indicated test method can be carried out. Device 1 comprises a fixed upper part 2, a part 3 movable in the direction of the arrows A and A', fastening means 4, 4', 4" for the cables to be tested, a supporting roll 5 and a dead weight 6. The lower part 3 is driven via a crank-connecting rod mechanism (not shown). The distance d between the fastening means 4 and 4' is 1.75 inches, and the distance l between the fastening means 4' and 4" is 11 inches. The upper wire 7 and the lower wire 8 rub against one another at point 9. During the test, part 3 is moved over a distance (peak-to-peak) of 15 mm at a frequency of 10 Hz. The measure of wear resistance is defined as the number of cycles of motion completed before electrical contact between the metal cores is measured.

Surface roughness was measured with a device commercially available under the name of "Perthometer S5P", with the cable being clamped in a holder. The measuring conditions were as follows:

sensor radius 3 $\mu$m
filter cut-off 0.08 mm
sensor path 1.5 mm
sensor velocity 0.5 mm/s
sensor pressure about 70 mg

Comparative examples

A linear polyethylene with a weight-average molecular weight of 200,000 was extruded around a 1 mm thick wire in the melt phase, at an extrusion temperature of about 190¤C, at wire velocities of 10 and 15 m/min., respectively. See Table II.

## T A B L E    II

|  |  | Comp. ex. 1 | Comp. ex. 2 |
|---|---|---|---|
| Wire velocity | m/min | 10 | 15 |
| Wire temperature | ºC | 20 | 20 |
| Die gap width | mm | 0.2 | 0.2 |
| Extrusion speed | m/min | 0.1 | 0.1 |
| Covering thickness | μm | 21 | 16 |
| Thickness spread (10 measurements) | % | 18 | 17 |
| Wear number x 106 |  | 7.1 | 6.4 |
| Roughness | Ra (μm) | 7.4 | 7.4 |
|  | Rt (μm) | 11.8 | 11.2 |

## Claims

1. Process for applying a covering of a high molecular polyolefinic plastic around a tube-or wire-shaped object, comprising

1) preparing a solution of a high molecular polyolefin and an organic solvent with a concentration of between 5 and 50 wt %;

2) extruding the said solution through an annular extrusion gap, around a tube-or wire-shaped object fed within the circumference of the gap;

3) discharging, stretching and substantially removing solvent from the extrudate and contacting the same with the object to be covered, the ratio of the velocity at which the extrudate is discharged from the annular gap to the velocity of the object being between 10 and 1000, and the stretching rate of the extrudate being between 10 and 20,000 %/s, in particular between 50 and 20,000 %/s;

4) cooling the covered product and further removing solvent from the covering, optionally followed by an after-treatment.

2. Process according to Claim 1, characterized in that a solution is prepared of a high molecular polyethylene with a weight-average molecular weight of between 250,000 and 6,000,000, preferably more than 800,000, at a concentration, in solution, of between 8 and 30 wt.%.

3. Process according to Claim 2, characterized in that the covering contains less than 20 ppm titanium, less than 65 ppm chlorine and less than 40 ppm Al.

4. Process according to Claim 1, characterized in that a solution of polypropylene and an organic solvent is prepared using a polypropylene with a weight-average molecular weight of between 400,000 and 6,000,000.

5. Process according to any one of Claims 1-4, characterized in that an after-treatment is applied in which the covered object is in its entirety pulled through a suitable die which has been brought to a temperature of between 30¤C and the solution temperature of the polymer in the solvent used.

FIG.1